# EUROPEAN PATENT SPECIFICATION

(11) **EP 1 675 804 B1**
(45) Date of publication and mention of the grant of the patent: **04.03.2009**
(21) Application number: 04791561.6
(22) Date of filing: 15.10.2004
(51) Int. Cl.: C01G 39/00

(54) **PROCESS FOR PRODUCING AMMONIUM POLYTHIOMOLYBDATE OF THE FORMULA (NH4)2MO3S13.N H2O**
VERFAHREN ZUR HERSTELLUNG VON AMMONIUMPOLYTHIOMOLYBDAT DER FORMEL (NH4)2MO3S13.N H2O
PROCEDE PERMETTANT DE PRODUIRE EN POLYTHIOMOLYBDATE D'AMMONIUM

(30) Priority: 24.10.2003 US 693476
(43) Date of publication of application: 05.07.2006
(73) Proprietor: Infineum International Limited, Abingdon, Oxfordshire OX13 6BB (GB)
(72) Inventor: WANGNER, Ronald P., Infineum USA L.P., New Jersey, NJ 07036 (US); JOHN, Joby Varughese, Fair Lawn, NJ 07410 (US); GIFFIN, Gregory Charles, Infineum USA L.P, New Jersey, NJ 07036 (US)
(74) Representative: Goddard, Frances Anna
(86) International application number: PCT/GB2004/004359
(87) International publication number: WO 2005/044729

(56) References cited:
- WO-A-95/29126
- US-A- 3 764 649
- US-A- 4 604 278
- DATABASE CA [Online] CHEMICAL ABSTRACTS SERVICE, COLUMBUS, OHIO, US; MUELLER, A. ET AL: "Molybdenum(IV) sulfide-disulfide complex ([MoIV3S(S2)6]2-) from amorphous molybdenum trisulfide by the reaction with hydroxide and R = 0.015 structure of (NH4)2[MoIV3S(S2)6].H2O" XP002318423 retrieved from STN Database accession no. 119:151081 & EUROPEAN JOURNAL OF SOLID STATE AND INORGANIC CHEMISTRY , 30(5), 565-72 CODEN: EJSCE5; ISSN: 0992-4361, 1993,
- DATABASE CA [Online] CHEMICAL ABSTRACTS SERVICE, COLUMBUS, OHIO, US; MUELLER, A. ET AL: "Studies on the triangular [molybdate-disulfido-sulfido] cluster [Mo3S13]2-: electronic structure (X.alpha. calculations, XPS), crystal structure of (Ph4As)2[Mo3S13].2CH3CN and a refinement of the crystal structure of (NH4)2[Mo3S13].H2O" XP002318424 retrieved from STN Database accession no. 116:98146 & ZEITSCHRIFT FUER ANORGANISCHE UND ALLGEMEINE CHEMIE , 605, 175-88 CODEN: ZAACAB; ISSN: 0044-2313, 1991,
- DATABASE CA [Online] CHEMICAL ABSTRACTS SERVICE, COLUMBUS, OHIO, US; MUELLER, ACHIM ET AL: "Molybdenum-sulfur clusters" XP002318425 retrieved from STN Database accession no. 114:113911 & INORGANIC SYNTHESES , 27, 47-51 CODEN: INSYA3; ISSN: 0073-8077, 1990,

## Description

The present invention relates to a process for producing an ammonium polythiomolybdate or a hydrate thereof, in particular, although not exclusively to, a process for producing an ammonium polythiomolybdate of the formula (NH₄)₂Mo₃S_{13•}nH₂O.

Ammonium polythiomolybdate has found use as a precursor in the preparation of molybdenum dithiocarbamate additives for lubricants.

U₋S₋ Patent 3,764,649 discloses the preparation of ammonium polythiomolybdate of the formula 3MoS_{4•}2NH₄OH by reacting an aqueous ammoniacal solution of ammonium molybdate and ammonium polysulfide at 175-220°C and 300-700 psig, U.S. Patent 4,604,278 teaches the production of ammonium letrathiomolybdate by reacting an ammoniacal molybdate solution with hydrogen sulfide gas in a closed system.

[DATABASE CA [Online] CHEMICAL ABSTRACTS SERVICE, COLUMBUS, OHIO, US; MUELLER, ACHIM ET AL retrieved from STN Database accession no. 114:113911] describes preparing (NH₄)₂[Mo₃S(S₂)₆].nH₂O, where n is 0-2, and (NH₄)₂[Mo₂(S₂)₆].2H₂O individually and together from polysulfide solutions and (NH₄)₆[Mo₇O₂₄] or (NH₄)₂[MoO₂S₂] under different reaction conditions, The polysulfides are described as being prepared from S₈ and H₂S and NH₃.

[DATABASE CA [Online] CHEMICAL ABSTRACTS SERVICE, COLUMBUS, OHIO, US; MUELLER, A. ET AL retrieved from STN Database accession no. 119:151081] describes preparing the molybdenum(IV) sulfide-disulfide complex (MolV₃S(S₂)₆]²⁻) from amorphorus molybdenum trisulfide by the reaction with hydroxide, and describes the R = 0.015 structure of (NH₄)₂[MoIV₃S(S₂)₆]. H₂O.

[DATABASE CA [Online] CHEMICAL ABSTRACTS SERVICE, COLUMBUS, OHIO, US; MUELLER, A. ET AL retrieved from STN Database accession no. 116:98146] describes studies on the triangular [molybdate-disulfido-sulfido] cluster [Mo₃S₁₃]²⁻.

Heretofore, the process commercially practiced for making ammonium polythiomolybdate has involved the use of ammonium sulfide, which results in the formation of ammonium thiosulfate as an undesired impurity that must be removed.

Therefore, a process that avoids ammonium thiosulfate formation would be highly desirable and an advancement in the art. In addition, a simpler process for producing ammonium polythiomolybdate economically on a commercial scale is also desirable.

The present Invention provides a process for producing an ammonium polythiomolybdate or a hydrate thereof of the formula (NH₄)₂Mo₃S_{13•}nH₂O where n is 0, 1 or 2 comprising:
(a) reacting an aqueous ammoniacal molybdate solution with hydrogen sulfide gas at superatmospheric pressure until the hydrogen sulfide is no longer absorbed by the solution, said solution and said gas being in a closed system and the flow of said gas being regulated at an elevated pressure;
(b) heat soaking the reaction product of step (a) at a temperature above 175°C, in a closed reactor, in the presence of elemental sulfur and at a pressure of between 4-7 MPa (600-1000 psig).

The ammoniacal ammonium molybdate solution preferably comprises ammonium polysulfide, which comprises a mixture of (NH₄)₂S and elemental sulfur, S₈, and in which solution the raw material source of molybdenum may be MoO₃, (NH₄)₂Mo₂O₇ or (NH₄)₆Mo₇O₂₄. Molybdenum concentration may be 5 to 300 grams of Mo per litre.

Preferably, the aqueous ammoniacal molybdate solution is reacted with the hydrogen sulfide gas at a pressure in the range of 30-350 kPa (5 to 50 psig). The aqueous ammoniacal molybdate solution may be reacted with the hydrogen sulfide gas for between l and 6 hours. The length of time required for the reaction between the ammoniacal molybdate solution and the hydrogen sulfide gas will depend on the size of the reaction vessel, the amount of molybdenum charged, and the pressure of the hydrogen sulfide gas.

The product of step (a) is a slurry consisting of a solid, essentially all of which is ammonium tetrathiomolybdate, and a mother liquor. The ammonium tetrathiomolybdate contains a portion of the starting molybdenum and the mother liquor contains the balance of the molybdenum.

The reaction between the ammoniacal molybdate solution and the hydrogen sulfide gas is done in a closed system. Therefore, only the hydrogen sulfide that is reacted will be drawn off the source of the gas, so no gas is wasted. A gas regulator on the hydrogen sulfide gas line maintains the pressure inside the sealed reaction tank at the desired pressure. As the hydrogen sulfide is used up by the reaction to form the ammonium tetrathiomolybdate, the pressure inside the tank is effectively decreased.

This causes the hydrogen sulfide gas regulator to allow more gas into the tank until the pressure stabilizes at the desired pressure. As the hydrogen sulfide is reacted more is admitted to the reaction tank. Since the reaction to form the ammonium tetrathiomolybdate is exothermic, the temperature will increase by 20°C to 30°C during the reaction. When the temperature in the reaction vessel begins to drop, it indicates that the reaction has reached completion. The contents of the reaction tank have therefore reached equilibrium and the flow of the hydrogen sulfide gas stops.

Elemental sulfur is then added to the resulting slurry, which is then heat soaked at a temperature above 175°C, and at a pressure between 4-7 MPa (600 and 1000 psig). Preferably, the slurry is heat soaked at a temperature between 175-200°C. The heat soaking step causes the oxidation state of the molybdenum to change and the ammonium tetrathiomolybdate is converted to the desired ammonium polythiomolybdate of the formula (NH₄)₂Mo₃S_{13•}nH₂O.

Advantageously, steps (b) is a continuation of the process of step (a) carried out subsequent to step (a) in the same reaction vessel.

After the heat soaking step, step (b), the reaction mixture is cooled before separation and washing. Suitably, the reaction mixture is cooled to at least to 60°C, and preferably, to room or ambient temperature.

The cooled reaction mixture is then separated, by any standard method, to remove the solid from the major portion of the mother liquor. The preferred method of separation is filtration. The solid ammonium polythiomolybdate is water washed and the crystals are vacuum dried to a temperature of no greater than 35°C. The mother liquor and wash water are preferably recycled back into the process.

Although that above outline process involves addition of the elemental sulfur to the ammonium tetrathiomolybdate slurry, as an alternative the elemental sulfur may be added as a separate reactant at the start of step (a), i.e. before the hydrogen sulfide addition. In this case, the elemental sulfur may be pre-mixed with the ammonium sulfide solution or the recycled mother liquor prior to addition thereof to the reactor for reaction with the hydrogen sulfide gas in step (a).

The process of this invention offers several advantages: multiple processing steps are eliminated, lower amounts of by-products are formed, more mother liquor is recycled to the process, thereby reducing disposal costs, the amount of water wash solution is reduced, and there is a higher product yield of ammonium polythiomolybdate.

### EXAMPLE

This novel process requires the reaction to be conducted in a high pressure vessel. The raw materials can all be charged into a single reactor or the MOX (molybdic oxide) powder can be premixed in a separate vessel along with the ML (mother liquor) and then charged into the main reactor (pre-charging the MOX with ML and mixing for 30-60 minutes saves cycle-time). After the charges are complete into the main reactor, the reactor is closed up, purged with inert gas (N₂) and hydrogen sulfide gas is fed to the reactor. A pressure between 170-350 kPa (25 psig and 50 psig) is maintained while applying cooling water to the reactor jacket and/or coils. Once the exothermic reaction is complete, H₂S feed is stopped and the contents are heated up. The pressure in the reactor increases with the vapor pressure of the contents as the temperature goes up. The reaction mass is heat soaked and then cooled. Once the batch is completed and cooled down, the solids are recovered by filtration and then dried. It can then be directly dropped/packaged into super-sacks after confirming the material is dry. See table below for sequence and cycle-times.

### CHARGES TO THE REACTOR:

The following charges using ML recycling yield about one metric ton ATM (ammonium polythiomolybdate product) per batch.

| | |
|---|---|
| Molybdic oxide | 567kg |
| | (1,250 lb) |
| Ammonium Polysulfide solution (20% sulfide content as H₂S and | 1361keg |
| 22% NH₃ content) (APS) | (3,000 lb) |
| Sulfur (industrial grade dry sulfur) | 272kg |
| | (600 lb) |
| Mother Liquor recycle; Mother Liquor has 4.5-5.5 wt.% ammonia | 4252kg |
| and 8-9 wt.% H₂S in the aqueous solution | (9,375 lb) |
| H₂S | ∼363keg |
| | (∼800 lb) |
| Yield (Dried ATM) | 998kg |
| | (2,200 lb) |
| Drying losses | ∼136kg |
| | (∼300 lb) |
| ML purged | 1442kg |
| | (3,180 lb) |

The first batch will obviously have no starting mother liquor. Ammonium polysulfide should be charged in its place. On subsequent batches, most of the filtrate or ML is used to dissolve the necessary amount of molybdic oxide reactant. This solution is combined with the fresh ammonium polysulfide to make-up the new reaction solution.

The following is a conservative estimate of the cycle times for individual steps of the ATM process:

| **Process Step** | | **Cycle Time, hrs.** |
|---|---|---|
| a. | Charge MOX/ML pre-mixed solution to reactor vessel | 0.5 |
| b. | Charge APS to reactor | 1.0 |
| c. | Purge reactor with inert gas (to scrubber) | 0.5 |
| d. | Add H2S to the reactor. Maintain a pressure of 25-50 psig | 4.0 |
| e. | Heat-up to reaction temperature of 180°C to 200°C | 3.0 |
| f. | React at 180°C to 200°C | 3.0 |
| g. | Cool to filtration temperature of < 50°C | 4.0 |
| h. | Transfer to filter | 1.0 |
| TOTAL CYCLE TIME IN REACTOR | | 17.0 |
| i. | Filtration | 4.0 |
| j. | Drying/packaging | 3.0 |

## Claims

1. A process for producing an ammonium polythiomolybdate of the formula (NH₄)₂Mo₃S_{13•}nH₂O where n is 0, 1 or 2 comprising:
(a) reacting an aqueous ammoniacal molybdate solution with hydrogen sulfide gas at superatmospheric pressure until the H₂S is no longer absorbed by the solution, said solution and said gas being in a closed system and the flow of said gas being regulated at an elevated pressure;
(b) heat soaking the reaction product of step (a) at a temperature above 175°C, in a closed reactor, in the presence of elemental sulfur and at a pressure of 4-7 MPa (600-1000 psig).

2. A process according to claim 1, wherein the ammonium polythiomolybdate produced is (NH₄)₂Mo₃S₁₃.

3. A process according to claim 1 or 2, wherein the ammoniacal molybdate solution contains MoO₃, (NH₄)₂S and elemental sulfur.

4. A process according to claims 1 or 2, wherein elemental sulfur is added to the reaction product of step (a) before the heat soaking of step (b) commences.

5. A process according to claim 1, 2 or 3, wherein the pressure in step (a) is 30-350 kPa (5-50 psig).

6. A process according to any one of the preceding claims, wherein the temperature in step (b) is between 175 and 200°C.

## Patentansprüche

1. Verfahren zur Herstellung eines Ammoniumpolythiomolybdats mit der Formel (NH₄)₂Mo₃S₁₃ nH₂O, in der n 0, 1 oder 2 ist, bei dem
(a) eine wässrige ammoniakalische Molybdatlösung bei mehr als atmosphärischem Druck mit Schwefelwasserstoff umgesetzt wird, bis das H₂S nicht länger von der Lösung absorbiert wird, wobei sich die Lösung und das Gas in einem geschlossenen System befinden und der Gasstrom auf einen erhöhten Druck geregelt wird;
(b) das Reaktionsprodukt von Stufe (a) bei einer Temperatur von mehr als 175°C in einem geschlossenen Reaktor in Gegenwart von elementarem Schwefel und bei einem Druck von 4 bis 7 MPa (600 bis 1000 psig) wärmebehandelt wird.

2. Verfahren nach Anspruch 1, bei dem das hergestellte Ammoniumpolythiomolybdat (NH₄)₂Mo₃S₁₃ ist.

3. Verfahren nach Anspruch 1 oder 2, bei dem die ammoniakalische Molybdatlösung MoO₃, (NH₄) ₂S und elementaren Schwefel enthält.

4. Verfahren nach einem der Ansprüche 1 oder 2, bei dem der elementare Schwefel vor Beginn der Wärmebehandlung der Stufe (b) zu dem Reaktionsprodukt der Stufe (a) gegeben wird.

5. Verfahren nach den Ansprüchen 1, 2 oder 3, bei dem der Druck in Stufe (a) 30 bis 350 kPa (5 bis 50 psig) beträgt.

6. Verfahren nach einem der vorhergehenden Ansprüche, bei dem die Temperatur in Stufe (b) zwischen 175 und 200°C liegt.

## Revendications

1. Procédé de production d'un polythiomolybdate d'ammonium de formule (NH₄) ₂Mo₃S₁₃ • nH₂O où n est 0, 1 ou 2, comprenant :
(a) la réaction d'une solution aqueuse ammoniacale de molybdate avec de l'hydrogène sulfuré gazeux à une pression supérieure à la pression atmosphérique jusqu'à ce que le H₂S ne soit plus absorbé par la solution, ladite solution et ledit gaz se trouvant dans un système fermé et l'écoulement dudit gaz étant régulé à une pression élevée ;
(b) la maturation thermique du produit réactionnel de l'étape (a) à une température supérieure à 175°C, dans un réacteur fermé, en présence de soufre élémentaire et à une pression de 4 à 7 MPa (600 à 1000 psig).

2. Procédé selon la revendication 1, dans lequel le polythiomolybdate d'ammonium produit est (NH₄)₂Mo₃S₁₃.

3. Procédé selon la revendication 1 ou 2, dans lequel la solution ammoniacale de molybdate contient MoO₃, (NH₄)₂S et du soufre élémentaire.

4. Procédé selon la revendication 1 ou 2, dans lequel le soufre élémentaire est ajouté au produit réactionnel de l'étape (a) avant que ne commence la maturation thermique de l'étape (b).

5. Procédé selon la revendication 1, 2 ou 3, dans lequel la pression dans l'étape (a) est de 30 à 350 kPa (5 à 50 psig).

6. Procédé selon l'une quelconque des revendications précédentes, dans lequel la température dans l'étape (b) est comprise entre 175 et 200°C.
